# EUROPÄISCHE PATENTSCHRIFT

(11) **EP 2 371 046 B1**
(45) Veröffentlichungstag und Bekanntmachung des Hinweises auf die Patenterteilung: **10.01.2018**
(21) Anmeldenummer: 09764721.8
(22) Anmeldetag: 27.11.2009
(51) Int. Cl.: H02G 3/32, B60R 16/02

(54) **DRAHTBEFESTIGUNGSVORRICHTUNG**
WIRE FASTENING DEVICE
DISPOSITIF DE FIXATION DE FILS

(30) Priorität: 28.11.2008 DE 102008059360
(43) Veröffentlichungstag der Anmeldung: 05.10.2011
(73) Patentinhaber: Illinois Tool Works Inc., Glenview, IL 60025 (US)
(72) Erfinder: ELSNER, Markus, 67657 Kaiserslautern (DE); HOFMANN, Jürgen, 67304 Eisenberg (DE); LEIDNER, Vitali, 67677 Enkenbach-Alsenborn (DE)
(74) Vertreter: Hauck Patentanwaltspartnerschaft mbB
(86) Internationale Anmeldenummer: PCT/EP2009/008465
(87) Internationale Veröffentlichungsnummer: WO 2010/060634

(56) Entgegenhaltungen:
- DE-A1- 3 812 071
- DE-U1-202006 001 743
- DE-U1-202007 000 938
- JP-A- 2008 007 161
- US-A- 3 632 071

## Beschreibung

Die Erfindung betrifft eine Befestigungsvorrichtung für ein Kabel nach dem Oberbegriff des Anspruchs 1.

Aus der DE 20 2007 000 938 U1 ist eine Befestigungsvorrichtung für Kabel bekannt, mit einem Kantenklippteil und einem einstückig mit dem Kantenklippteil verbundenen Kabelband und Kabelbandschloss. Die Befestigungsvorrichtung ermöglicht eine Befestigung eines Kabels in einer vorgegebenen Richtung an einer Kante eines Basisteils.

Die DE 38 12 071 A1 zeigt einen Adapter mit mehreren Kopplungsstücken, auf die Schellen oder Klammern zur Befestigung von Rohren oder Kabeln in Richtung verschiedener Einsteckachsen aufgesteckt werden können.

Aus der gattungsgemäßen DE 20 2006 001 743 U1 sind Befestigungsvorrichtungen für Kabelbänder bekannt, die bei verschiedenen Ausführungsformen jeweils ein Kabelband in einer vorgegebenen Orientierungsrichtung befestigen. Je nach der gewünschten Orientierungsrichtung muss dabei die entsprechende Befestigungsvorrichtung aus einem Sortiment von verschiedenen Ausführungsformen ausgewählt werden. Diese benötigte Vielzahl verschiedener Ausführungsformen stellt entsprechende erhöhte Anforderungen an die Lagerhaltung und Logistik.

Eine Befestigungsvorrichtung für mehrere Kabelbänder in zwei möglichen Richtungen ist in der US 6,196,751 B1 gezeigt.

Die DE 20 2008 000 510 U1 zeigt einen zweiteiligen Halter für ein Kabelband, wobei ein Basisteil formschlüssig mit einem Einschub-Element verbunden werden kann.

Ein zweiteiliger Halter für ein Kabelband, welcher in der WO 2007/133966 A1 offenbart ist, kann mit einem Befestigungsteil auf einer Schiene befestigt werden. Ein Halterungsteil für ein Kabelband ist auf dem Befestigungsteil drehbar angebracht.

Ziel der Erfindung ist es, eine noch flexibler einsetzbare Befestigungsvorrichtung für ein Kabel, zu schaffen.

Dieses Ziel wird durch eine Befestigungsvorrichtung nach Anspruch 1 gelöst. Eine solche Befestigungsvorrichtung ermöglicht die Befestigung eines Kabels oder Kabelstrangs in allen drei Raumrichtungen relativ zur Kante des Basisteils, wodurch, unabhängig davon, in welcher Raumrichtung das Kabel am Basisteil befestigt werden soll, nur eine Befestigungsvorrichtung benötigt wird. Somit lassen sich Kosten bei der Lagerhaltung und Logistik sparen, und die Anwendung der Befestigungsvorrichtung wird vereinfacht, da unabhängig von der Raumrichtung, in welcher das Kabel am Basisteil befestigt werden soll, nur ein einziger Typ der Befestigungsvorrichtung benötigt wird.

Die Haltevorrichtung kann zur gleichzeitigen Befestigung mehrerer Kabelbänder am Kantenklippteil ausgebildet sein. Die Haltevorrichtung weist einen ersten Befestigungsabschnitt zum Halten eines ersten Kabelbands am Kantenklippteil und einen zweiten Befestigungsabschnitt zum Halten eines zweiten Kabelbands auf, wobei die Kabelbänder vorzugsweise in die Befestigungsabschnitte einführbar sind. Auf diese Weise ist es möglich, dass mindestens zwei Kabelbänder gleichzeitig am Kantenklippteil gehalten werden und somit mindestens zwei unterschiedliche Kabel oder Kabelstränge an einer einzigen Befestigungsvorrichtung befestigt werden können.

Vorzugsweise ist ein dritter Befestigungsabschnitt zum Halten eines dritten Kabelbands am Kantenklippteil vorgesehen. Somit können drei Kabelbänder gleichzeitig am Kantenklippteil befestigt sein.

Die Befestigungsabschnitte können Führungen zum Einschieben eines Kabelbandes bilden. Diese Führungen bestimmen vorzugsweise die Orientierungsrichtung des Kabelbandes.

Gemäß einer bevorzugten Ausführungsform sind ein erster Befestigungsabschnitt an der Oberseite des Kantenklippteils und ein zweiter Befestigungsabschnitt seitlich am Kantenklippteil vorgesehen. Auf diese Weise wird die Halterung für das Kabelband in den unterschiedlichen Orientierungsrichtungen erleichtert.

### Erfindungsgemäß sind mehrere

Befestigungsabschnitte als gemeinsames Halterungsteil ausgebildet. Dies ermöglicht eine kompakte Bauweise der Haltevorrichtung durch die Kombination mehrerer Befestigungsabschnitte in einem gemeinsamen Halterungsteil.

Vorzugsweise ist mindestens ein Befestigungsabschnitt mit dem Kantenklippteil einstückig hergestellt. Dies ermöglicht, die Zahl der Einzelteile der Befestigungsvorrichtung auf ein Minimum zu reduzieren.

Gemäß einer weiteren Ausführungsform ist ein Halterungsteil als separates Bauelement ausgebildet, welches am Kantenklippteil befestigt ist. Dies ermöglicht eine höhere Flexibilität bei der Gestaltung des Halterungsteils.

Beispielsweise ist das Halterungsteil mit einer Führung auf das Kantenklippteil aufgesteckt und mit ihm verrastet. Auf diese Weise können am Kantenklippteil so viele Halterungsteile aufgesteckt werden, wie für die jeweilige Anwendung benötigt werden.

Gemäß einer weiteren Ausführungsform ist das Halterungsteil drehbar zum Kantenklippteil ausgebildet. Dies ermöglicht eine freie Wahl des Winkels, in dem das Kabelband relativ zum Kantenklippteil gehalten wird.

Es kann ein Fixiermittel vorgesehen sein, welches das drehbare Halterungsteil in einer Umfangsrichtung fixiert. Auf diese Weise ist bei der Befestigung des Kabels ein beliebiger Winkel in der Umfangsrichtung möglich, wobei dieser Winkel nach der Montage reversibel oder irreversibel fixiert werden kann.

Gemäß einer bevorzugten Ausführungsform sind ein oberes Halterungsteil mit wenigstens einem Befestigungsabschnitt an der Oberseite des Kantenklippteils und mindestens ein seitliches Halterungsteil mit wenigstens einem Befestigungsabschnitt seitlich am Kantenklippteil vorgesehen. Vorzugsweise weist jedes Halterungsteil zwei Befestigungsabschnitte für die Anbringung eines Kabelbandes in zwei orthogonal zueinander verlaufenden Orientierungsrichtungen auf. Dies ermöglicht beispielsweise die Anbringung eines Halterungsteils in einer Ebene parallel zur Kante des Basisteils und des zweiten Halterungsteils in einer Ebene senkrecht zur Kante des Basisteils.

Ein Kabelband und der Kantenklippteil und/oder ein Halterungsteil können einstückig miteinander verbunden sein. Dies führt zu einer weiteren Reduzierung der Anzahl der Einzelteile der Befestigungsvorrichtung.

Die Haltevorrichtung kann als Kabelbandschloss ausgebildet sein, wodurch ein Kabelband direkt an der Haltevorrichtung im Kabelbandschloss einrasten kann.

Vorzugsweise ist ein Kabelband ein separates Bauteil, welches ein Kabelbandteil und ein Kabelbandschloss aufweist. Auf diese Weise lassen sich die Anzahl der Kabelbänder und die Orientierungsrichtung des Kabelbands frei wählen.

Gemäß einer bevorzugten Ausführungsform ist ein in den Kantenklippteil einsetzbares Metallteil vorgesehen, wobei das Metallteil wenigstens eine Blechkralle aufweist, die bei aufgesteckter Befestigungsvorrichtung direkt am Basisteil angreift. Somit arretiert die Blechkralle die Befestigungsvorrichtung am Basisteil.

Es ist möglich, dass mehrere Kabelbänder an der Haltevorrichtung gehalten werden und die Orientierungsrichtungen der Kabelbänder eine Befestigung von mindestens zwei, in der gleichen Richtung verlaufenden Kabeln am Kantenklippteil vorsehen. Dies ermöglicht die Führung getrennter Kabel oder Kabelstränge in der gleichen Richtung.

Alternativ können mehrere Kabelbänder an der Haltevorrichtung gehalten werden und die Orientierungsrichtungen der Kabelbänder eine Befestigung von mindestens zwei, in verschiedenen Richtungen, insbesondere orthogonal zueinander, verlaufenden Kabeln am Kantenklippteil ermöglichen.

Vorzugsweise ist an einem Befestigungsabschnitt ein nach außen gerichteter Fortsatz vorgesehen, wobei ein an der Befestigungsvorrichtung befestigtes Kabel zwischen dem Fortsatz und dem vom Befestigungsabschnitt gehaltenen Kabelband klemmbar ist. Durch den Fortsatz wird die Befestigung des Kabels oder des Kabelstranges verbessert, beispielsweise durch erhöhte Reibung zwischen Kabel und Fortsatz des Befestigungsabschnitts oder durch eine Formgebung, die eine Lagefixierung des Kabels ermöglicht.

Gemäß einer bevorzugten Ausführungsform ist der Fortsatz so geformt, insbesondere gewölbt, dass das geschlossene und angezogene Kabelband, ohne Zwischenklemmung eines Kabels, am Fortsatz außenseitig anliegt. Indem der Fortsatz sich sozusagen in Richtung zum schlaufenartigen Kabelbandes erstreckt, kann die Schlaufe bis auf Anschlag gezogen werden. Dies ermöglicht auch die Befestigung von sehr dünnen Kabeln, deren Querschnitt annähernd Null beträgt.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
Figur 1 eine perspektivische Ansicht des Kantenklippteils und der Haltevorrichtung einer Befestigungsvorrichtung gemäß einer ersten Ausführungsform der Erfindung;
Figur 2 eine weitere perspektivische Ansicht des Kantenklippteils und der Haltevorrichtung gemäß Figur 1;
Figur 3 eine perspektivische Ansicht der Befestigungsvorrichtung gemäß Figur 1 mit eingesetzten Kabelbändern;
Figur 4a bis Figur 4f verschiedene perspektivische Ansichten der Befestigungsvorrichtung gemäß Figur 1 mit unterschiedlicher Anzahl von Kabelbändern in unterschiedlichen Orientierungsrichtungen;
Figur 5 eine perspektivische Ansicht einer Befestigungsvorrichtung gemäß einer zweiten Ausführungsform der Erfindung;
Figur 6 eine Explosionsdarstellung der Befestigungsvorrichtung gemäß Figur 5;
Figur 7 eine Explosionsdarstellung einer Befestigungsvorrichtung gemäß einer dritten Ausführungsform der Erfindung; und
Figur 8 eine Ansicht der Ausführungsform nach Figur 7 in zusammengebautem Zustand

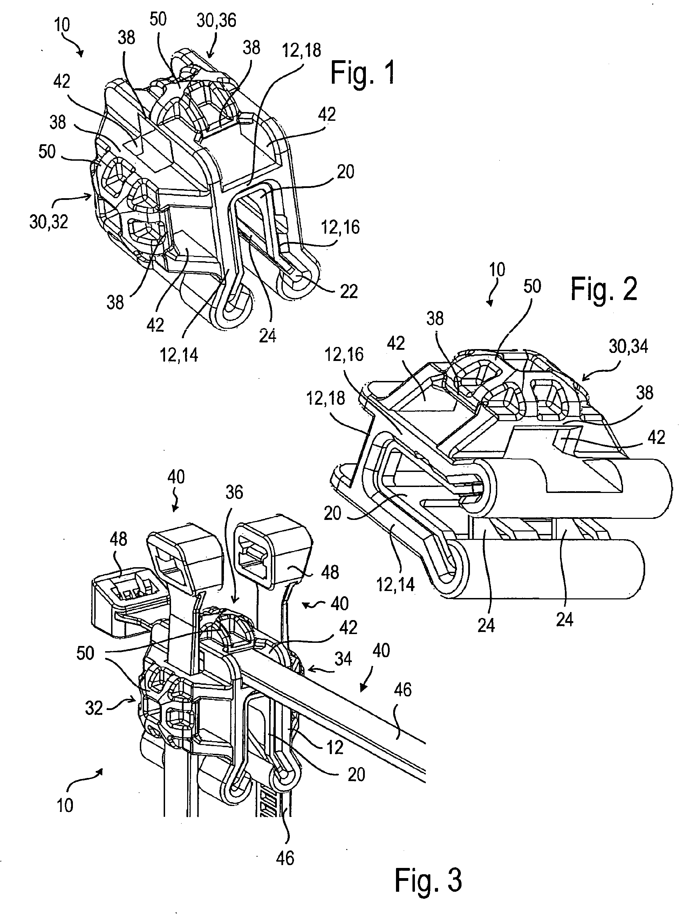

In den Figuren 1 bis 4f ist eine Befestigungsvorrichtung 10 gemäß einer ersten Ausführungsform der Erfindung gezeigt. Ein U-förmiges Kantenklippteil 12 weist zwei Schenkel 14, 16 auf, die über einen Verbindungsabschnitt 18, der die obere Seite des Kantenklippteils 12 bildet, insbesondere einstückig miteinander verbunden sind.

Zwischen dem ersten Schenkel 14 und dem zweiten Schenkel 16 ist ein U-förmiges Metallteil 20 angeordnet, wobei das Metallteil 20 an seinem oberen Ende am Verbindungsabschnitt 18 des Kantenklippteils 12 anliegt und mit seinen beiden unteren Enden in schrägen Ausnehmungen 22 in den Schenkeln 14, 16 eingerastet ist. Das Metallteil 20 weist mehrere Blechkrallen 24 auf (siehe Fig. 2), die bei aufgesteckter Befestigungsvorrichtung 10 direkt an einem Basisteil 26 angreifen, an dem die Befestigungsvorrichtung 10 und Kabel angebracht werden sollen. Das Basisteil 26 ist insbesondere ein ohnehin vorhandenes Blechteil an einem Fahrzeug. Die Schenkel 14, 16 des Kantenklippteils 12 sind federnd ausgebildet, wodurch sich das Kantenklippteil 12 besser an der Kante 28 des Basisteils 26 befestigen lässt.

Das Metallteil 20 kann vormontiert im Kantenklippteil 12 angebracht sein oder, je nach benötigter Anwendung, in das Kantenklippteil 12 eingeführt werden. Das Metallteil 20 wird u.U. je nach den Anwendungsbedürfnissen unterschiedlich ausgeführt sein, um verschiedene Ausführungsformen, insbesondere verschiedene Dicken der Kanten 28 der Basisteile 26 zu ermöglichen.

Eine Haltevorrichtung 30 ist einstückig mit dem Kantenklippteil 12 ausgeführt. Die Haltevorrichtung 30 umfasst ein erstes seitliches Halterungsteil 32, ein zweites seitliches Halterungsteil 34 und ein oberes Halterungsteil 36. An den Halterungsteilen 32, 34, 36 sind jeweils zwei Befestigungsabschnitte 38 vorgesehen. In die brückenartig ausgebildeten Befestigungsabschnitte 38, die sich kreuzen, kann ein Kabelband 40 eingeführt werden kann. An jedem Befestigungsabschnitt 38 sind Führungen 42 ausgebildet, die die Orientierungsrichtungen des Kabelbands 40 bestimmen.

Die Führungen 42 sind vorzugsweise so ausgebildet, dass eine Drehbewegung des Kabelbands 40 von mehr als ±5° innerhalb der Führung 42 verhindert wird.

Zu den Orientierungsrichtungen der Kabelbänder 40 ist zu bemerken, dass sowohl die Längsrichtung, in die sich das Kabelband 40 erstreckt, als auch die Drehausrichtung um eine Achse in dieser Längsrichtung für die Orientierung des Kabelbands 40 relevant sind.

In Figur 3 sind drei Kabelbänder 40 in jeweils ein Halterungsteil 32, 34, 36 eingeführt, ohne ein Kabel zu halten. Die Einführrichtung der Kabelbänder entspricht ihrer Längsrichtung. In der gezeigten Ausführungsform sind zwei Kabelbänder 40 entlang ihrer Längsrichtung senkrecht zur Kante und ein Kabelband 40 entlang seiner Längsrichtung parallel zur Kante in die Halterungsteile 32, 34, 36 eingeführt. Ais Orientierungsrichtung der Kabeibänder 40 wird im Folgenden die Richtung des durch das jeweilige Kabelband 40 gehaltenen Kabels/Kabelstranges 44 definiert.

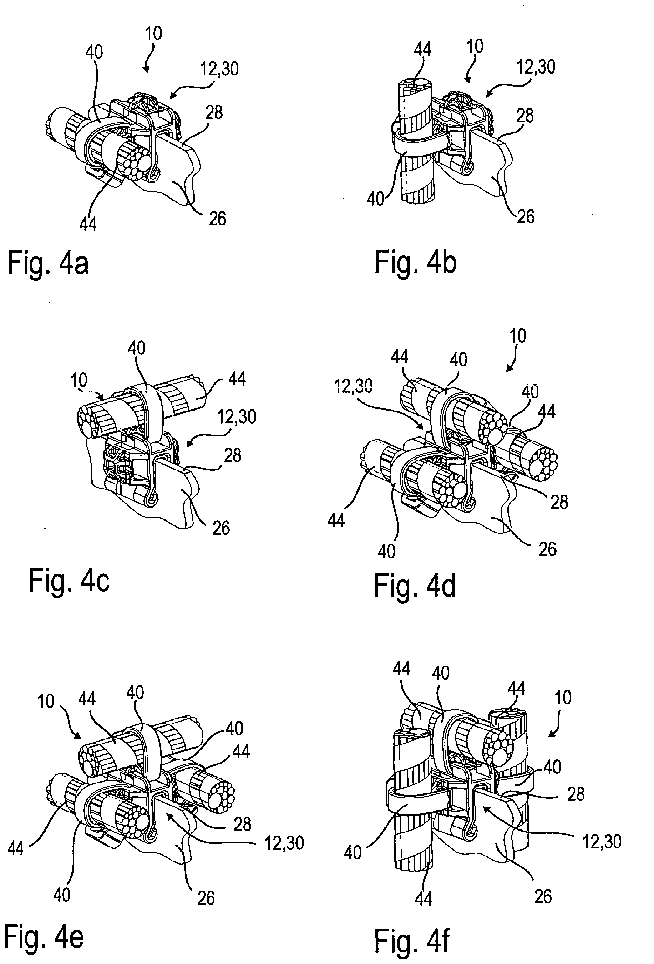

Wird ein Kabelband 40 in das Halterungsteil 32 in Einführrichtung entlang der Kante 28 und ein zweites Kabelband 40 in das Halterungsteil 36 in Einführrichtung entlang der Kante 28 eingeführt, so besitzen die beiden Kabelbänder um 90° verschiedene Orientierungsrichtungen, da aufgrund der unterschiedlichen Ausrichtungen der Kabelbänder 40 die von den beiden Kabelbändern 40 gehaltenen Kabel/Kabelstränge 44 in um 90° verschiedenen Richtungen verlaufen (vgl. Figur 4b und Figur 4c).

Gleichermaßen ist es auch möglich, dass Kabelbänder 40 mit verschiedenen Einführrichtungen in das jeweilige Halterungsteil 32 - 36 die gleiche Orientierungsrichtung aufweisen (vgl. Figur 4d, wo die Einführrichtung des oberen Kabelbandes horizontal und die der beiden seitlichen Kabelbänder 40 vertikal ist).

Wie in Figur 1 gut zu erkennen, sind die Halterungsteile 32, 34, 36 voneinander getrennt, denn die seitlichen Halterungsteile 32, 34 befinden sich vollständig auf den Außenseiten der Schenkel 14, 16, und das obere Halterungsteil 36 befindet sich vollständig auf der Oberseite des Verbindungsabschnitts 18 des Kantenklippteils 12.

Die Befestigungsabschnitte 38 weisen einen oder mehrere nach außen gewölbte Fortsätze 50 auf ihrer Außenseite auf. Werden die in Figur 3 gezeigten Kabelbänder 40 geschlossen, indem die Kabelbandteile 46 in die Kabelbandschlösser 48 gesteckt und angezogen werden, so bildet sich ein Zwischenraum zwischen dem Kabelband 40 und dem Befestigungsabschnitt, der das jeweilige Kabelband 40 hält. Bei weiterem Schließen des Kabelbands 40 verkleinert sich dieser Zwischenraum, bis aufgrund der Steifigkeit des Kabelbands kein weiteres Schließen des Kabelbands 40 mehr möglich ist. Die Form der Fortsätze 50 ist dabei so gewählt, dass das Kabelband 40 direkt am Fortsatz 50 anliegt. Auf diese Weise können auch sehr dünne Kabel 44, deren Durchmesser annähernd Null beträgt, von der Befestigungsvorrichtung gehalten werden. Es ist natürlich auch möglich, dass anders geformte Fortsätze 50 an den Befestigungsabschnitten 38 angebracht sind, beispielsweise, um die Reibung zwischen Kabel 44 und Befestigungsabschnitt 38 zu erhöhen oder eine Beschädigung der Kabel 44 durch Knicken zu verhindern.

Jedes Halterungsteil 32, 34, 36 weist zwei Befestigungsabschnitte 38 für die Anbringung eines Kabelbands 40 in zwei orthogonal zueinander verlaufenden Orientierungsrichtungen auf. Durch die Kombination der drei Halterungsteile 32, 34, 36 ist es somit möglich, Kabelbänder 40 in drei zueinander orthogonalen Orientierungsrichtungen am Kantenklippteil 12 zu halten.

In den Figuren 4a bis 4c sind drei Anwendungsbeispiele der Befestigungsvorrichtung 10 gezeigt, wobei die Kabelbänder 40 in jeweils einer der drei zueinander orthogonalen Orientierungsrichtungen gehalten werden. Die Kabelbänder 40 halten dabei jeweils ein Kabel/Kabeistrang 44.

Die Kabelbänder 40 sind separate Bauteile und weisen ein Kabelbandteil 46 und ein Kabelbandschloss 48 auf (siehe Fig. 3). Es ist daher möglich, je nach Anwendungsbedarf ein passendes Kabelband 40 auszuwählen, beispielsweise in Bezug auf die Länge oder den Kabelbandrastmechanismus.

Die Figuren 4d, 4e und 4f zeigen weitere Anwendungsbeispiele der Befestigungsvorrichtung 10, wobei mehrere Kabel/Kabelstränge 44 über mehrere Kabelbänder 40 an einem Kantenklippteil 12 befestigt sind. Es ist dabei möglich, dass mehrere Kabel/Kabelstränge 44 in der gleichen Richtung verlaufen und unabhängig voneinander am Kantenklippteil 12 befestigt sind (vgl. Fig. 4d). Es können auch mehrere Kabel/Kabelstränge 44 in unterschiedlichen Richtungen am Kantenklippteil 12 angebracht sein (vgl. Fig. 4e, 4f).

Es ist natürlich auch möglich, dass nicht nur Kabelstränge oder einzelne Kabel durch die Befestigungsvorrichtung 10 an der Kante 28 des Basisteils 26 befestigt sind. Es können beispielsweise auch Rohre oder Schläuche durch die Befestigungsvorrichtung 10 befestigt werden.

Es ist auch denkbar, dass ein oder mehrere Halterungsteile 32, 34, 36 als separates oder separate Bauelemente ausgebildet sind, welche am Kantenklippteil 12 befestigt werden, indem sie mit einer Führung auf das Kantenklippteil 12 aufgesteckt und an ihm verrastet sind.

Auch kann ein separates Halterungsteil drehbar zum Kantenklippteil 12 ausgebildet sein, oder das Kabelband kann im Befestigungsabschnitt drehbar sein. Nach der Montage der Befestigungsvorrichtung 10 lässt sich das drehbare Halterungsteil bzw. das drehbare Kabelband in einer Umfangsrichtung durch ein Fixiermittel fixieren. Dabei kann das Halterungsteil bzw. das Kabelband reversibel oder irreversibel fixiert werden, beispielsweise über eine mechanische Verriegelung und/oder Aktivierung eines beispielsweise mikroverkapselten Klebstoffes.

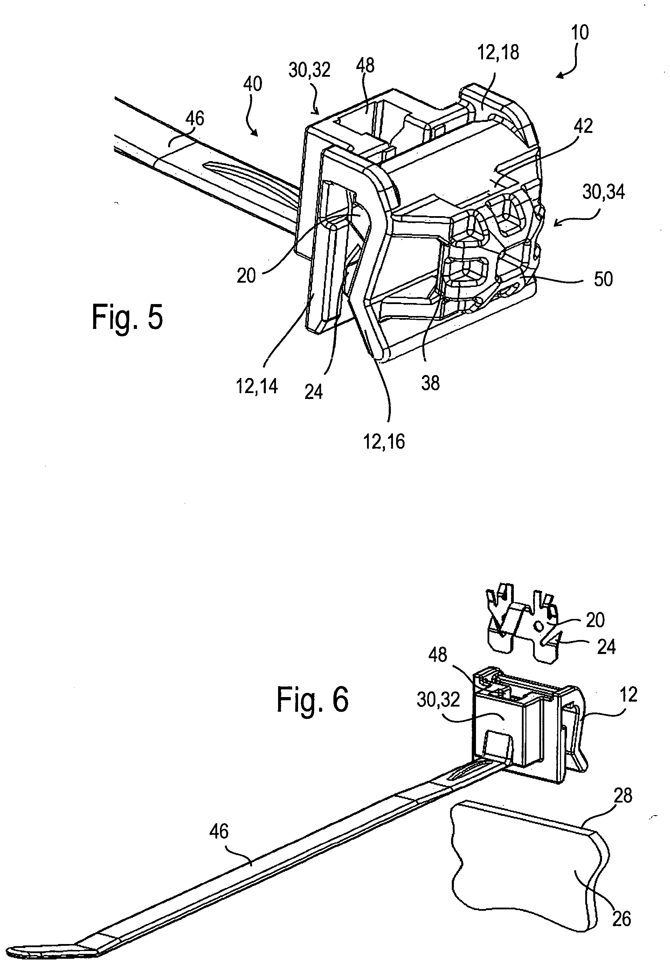

Figur 5 zeigt eine zweite Ausführungsform der Erfindung. Auf dem ersten Schenkel 14 des Kantenklippteils 12 ist ein erstes seitliches Halterungsteil 32 vorgesehen, das als Kabelbandschloss 48 ausgebildet ist. Das Halterungsteil 32 ist einstückig mit dem Kantenklippteil 12 und einem Kabelband 40 mit Kabelbandteil 46 ausgebildet. Auf dem zweiten Schenkel 16 des Kantenklippteils 12 ist ein zweites seitliches Halterungsteil 34 analog zur ersten Ausführungsform der Erfindung vorgesehen. Ein Metallteil 20 mit Blechkrallen 24 ist im Zwischenraum zwischen erstem und zweitem Schenkel 14, 16 angeordnet. Das einstückig mit dem Halterungsteil 32 ausgebildete Kabelband 40 erstreckt sich entlang einer ersten Orientierungsrichtung, senkrecht zum ersten Schenkel 14 des Kantenklippteils 12. Ein zweites, separates Kabelband 40 kann im zweiten seitlichen Halterungsteil 34 in zwei zueinander orthogonalen Richtungen eingeführt und gehalten werden.

Figur 6 zeigt eine Explosionsansicht der zweiten Ausführungsform der Erfindung. Das Metallteil 20 wird in dieser Ausführungsform von oben in den Zwischenraum zwischen erstem und zweitem Schenkel 14, 16 eingeführt. Es kann natürlich auch ein Metallteil 20 vorgesehen sein, das analog zur ersten Ausführungsform von unten oder seitlich in das Kantenklippteil 12 eingeführt wird.

Bei der Ausführungsform nach Figur 5 ist das auf der Oberseite der U-förmigen Befestigungsvorrichtung vorgesehene Halterungsteil 36 der ersten Ausführungsform zur vereinfachten Darstellung weggelassen worden, es ist jedoch vorhanden. Es ist möglich, dass ein oder mehrere Halterungsteile 32, 34, 36 der ersten Ausführungsform, analog zum ersten Halterungsteil 32 der zweiten Ausführungsform, einstückig mit einem Kabelband 40 ausgebildet sind, wobei bei mehreren einstückig mit dem Halterungsteil 32, 34, 36 ausgebildeten Kabelbändern 40 die Orientierungsrichtungen der Kabelbänder 40 orthogonal zueinander sind.

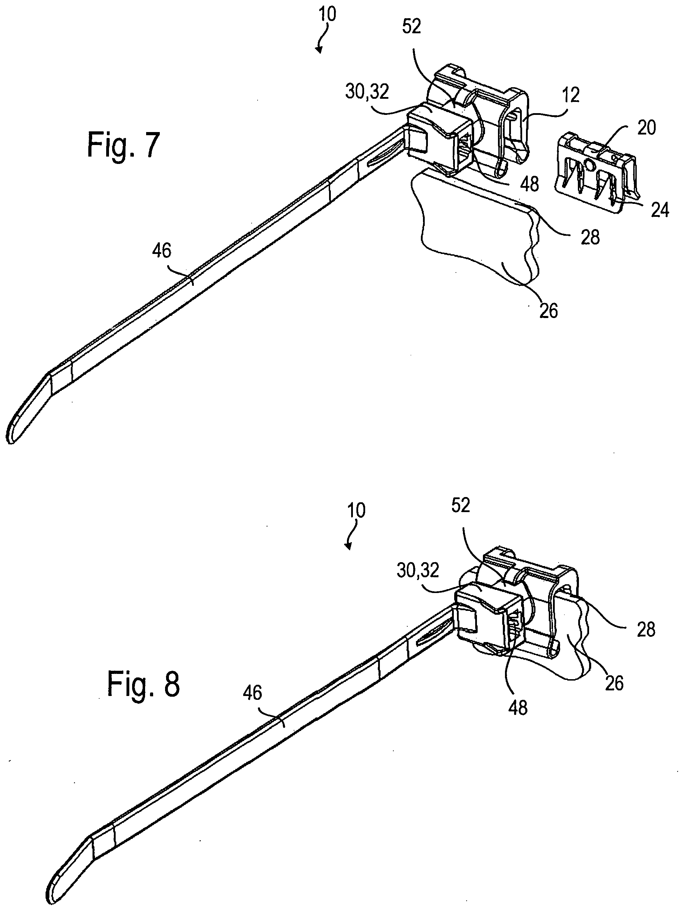

Figur 7 und Figur 8 zeigen eine dritte Ausführungsform der Erfindung, in der ein separates Halterungsteil 32 mit integriertem Kabelband 40 und Kabelbandschloss 48 drehbar gegenüber dem Kantenklippteil 12 ausgebildet ist. Eine Drehkupplung 52 ist zylinderförmig am Schenkel 14 des Kantenklippteils 12 ausgebildet. Das Halterungsteil 32 ist mit einem Zapfen versehen, der in der Drehkupplung 52 drehbar gelagert ist. Das Halterungsteil 32 und die Orientierungsrichtung des Kabelbands 40 sind somit um 360° frei drehbar. Es ist natürlich auch möglich, dass ein zweites seitliches Halterungsteil 34 und/oder ein oberes Halterungsteil 36 vorgesehen und drehbar ausgebildet sind.

In der Drehkupplung 52 kann auch eine Rastvorrichtung vorgesehen sein, die das Halterungsteil 32 in bestimmten Winkelabständen einrasten lässt, oder ein Fixiermittel, welches das drehbare Halterungsteil 32 in einer Umfangsrichtung fixiert.

Auch bei dieser Ausführungsform ist das auf der Oberseite der U-förmigen Befestigungsvorrichtung vorgesehene Halterungsteil 36 der ersten Ausführungsform zur vereinfachten Darstellung weggelassen worden, es ist jedoch vorhanden.

Es ist möglich, dass ein oder mehrere Halterungsteile 32, 34, 36 der ersten Ausführungsform analog zum separaten Halterungsteil 32 der dritten Ausführungsform drehbar gegenüber dem Kantenklippteil 12 ausgebildet sind, wobei bei mehreren drehbaren Halterungsteilen die daran befestigten Kabelbänder 40 in orthogonale Orientierungsrichtungen gedreht werden können.

## Patentansprüche

1. Befestigungsvorrichtung (10) für wenigstens ein Kabel (44), mit einem Kantenklippteil (12) zur Anbringung der Befestigungsvorrichtung (10) an einer Kante (28) eines Basisteils (26) und mit einer Haltevorrichtung (30) für wenigstens ein Kabelband (40), das wenigstens ein Kabel (44) umgibt, wobei die Haltevorrichtung (30) Befestigungsabschnitte (38) aufweist, **dadurch gekennzeichnet, dass** die Befestigungsabschnitte (38) eine Halterung für das Kabelband (40) in drei zueinander orthogonalen Kabelband-Orientierungsrichtungen bilden, so dass ein Kabelband (40) wahlweise in einer der drei Kabelband-Orientierungsrichtungen ausgerichtet am Basisteil (26) befestigbar ist, wobei mehrere Befestigungsabschnitte (38) als gemeinsames Halterungsteil (32, 34, 36) ausgebildet sind und ein Halterungsteil (32, 34, 36) zwei Befestigungsabschnitte (38) für die Anbringung eines Kabelbandes (40) in zwei orthogonal zueinander verlaufenden Orientierungsrichtungen aufweist.

2. Befestigungsvorrichtung (10) nach Anspruch 1, **dadurch gekennzeichnet, dass** die Haltevorrichtung (30) zur gleichzeitigen Befestigung mehrerer Kabelbänder (40) am Kantenklippteil (12) ausgebildet ist, mit einem ersten Befestigungsabschnitt (38) zum Halten eines ersten Kabelbands (40) am Kantenklippteil (12) und einem zweiten Befestigungsabschnitt (38) zum Halten eines zweiten Kabelbands (40), wobei die Kabelbänder (40) vorzugsweise in die Befestigungsabschnitte (38) einführbar sind sowie vorzugsweise mit einem dritten Befestigungsabschnitt (38) zum Halten eines dritten Kabelbands (40) am Kantenklippteil (12).

3. Befestigungsvorrichtung nach einem der vorhergehenden Ansprüche, **dadurch gekennzeichnet, dass** die Befestigungsabschnitte (38) Führungen (42) zum Einschieben eines Kabelbandes (40) bilden.

4. Befestigungsvorrichtung nach einem der vorhergehenden Ansprüche, **dadurch gekennzeichnet, dass** ein erster Befestigungsabschnitt (38) an der Oberseite des Kantenklippteils (12) und ein zweiter Befestigungsabschnitt (38) seitlich am Kantenklippteil (12) vorgesehen ist.

5. Befestigungsvorrichtung nach einem der vorhergehenden Ansprüche, **dadurch gekennzeichnet, dass** mindestens ein Befestigungsabschnitt (38) mit dem Kantenklippteil (12) einstückig hergestellt ist.

6. Befestigungsvorrichtung nach einem der vorhergehenden Ansprüche, **dadurch gekennzeichnet, dass** ein Halterungsteil (32, 34, 36) mit mindestens einem Befestigungsabschnitt (38) vorgesehen ist, wobei das Halterungsteil (32, 34, 36) als separates Bauelement ausgebildet ist, welches am Kantenklippteil (12) befestigt ist und insbesondere dass das Halterungsteil (32, 34, 36) mit einer Führung auf das Kantenklippteil (12) aufgesteckt und mit ihm verrastet ist.

7. Befestigungsvorrichtung nach 6, **dadurch gekennzeichnet, dass** das Halterungsteil (32, 34, 36) drehbar zum Kantenklippteil (12) ausgebildet ist und insbesondere ein Fixiermittel vorgesehen ist, welches das drehbare Halterungsteil (32, 34, 36) in einer Umfangsrichtung fixiert.

8. Befestigungsvorrichtung nach einem der vorhergehenden Ansprüche, **dadurch gekennzeichnet, dass** ein oberes Halterungsteil (36) mit wenigstens einem Befestigungsabschnitt (38) an der Oberseite des Kantenklippteils (12) und mindestens ein seitliches Halterungsteil (32, 34) mit wenigstens einem Befestigungsabschnitt (38) seitlich am Kantenklippteil (12) vorgesehen ist, wobei vorzugsweise jedes Halterungsteil (32, 34, 36) zwei Befestigungsabschnitte (38) für die Anbringung eines Kabelbandes (40) in zwei orthogonal zueinander verlaufenden Orientierungsrichtungen aufweist.

9. Befestigungsvorrichtung nach einem der vorhergehenden Ansprüche, **dadurch gekennzeichnet, dass** ein Kabelband (40) und der Kantenklippteil (12) und/oder ein Halterungsteil (32, 34, 36) einstückig miteinander verbunden sind.

10. Befestigungsvorrichtung nach einem der vorhergehenden Ansprüche, **dadurch gekennzeichnet, dass** die Haltevorrichtung (30) als Kabelbandschloss (48) ausgebildet ist oder dass ein Kabelband (40) ein separates Bauteil ist, welches ein Kabelbandteil (46) und ein Kabelbandschloss (48) aufweist.

11. Befestigungsvorrichtung nach einem der vorhergehenden Ansprüche, **dadurch gekennzeichnet, dass** ein in den Kantenklippteil (12) einsetzbares Metallteil (20) vorgesehen ist, wobei das Metallteil (20) wenigstens eine Blechkralle (24) aufweist, die bei aufgesteckter Befestigungsvorrichtung (10) direkt am Basisteil (26) angreift.

12. Befestigungsvorrichtung nach einem der vorhergehenden Ansprüche, **dadurch gekennzeichnet, dass** mehrere Kabelbänder (40) an der Haltevorrichtung (30) gehalten werden und die Orientierungsrichtungen der Kabelbänder (40) eine Befestigung von mindestens zwei in der gleichen Richtung verlaufenden Kabeln (44) am Kantenklippteil (12) ermöglichen und/oder die Orientierungsrichtungen der Kabelbänder (40) eine Befestigung von mindestens zwei in verschiedenen Richtungen, insbesondere orthogonal zueinander verlaufenden Kabeln (44) am Kantenklippteil (12) vorsehen.

13. Befestigungsvorrichtung nach einem der vorhergehenden Ansprüche, **dadurch gekennzeichnet, dass** an einem Befestigungsabschnitt (38) ein nach außen gerichteter Fortsatz (50) vorgesehen ist, wobei ein an der Befestigungsvorrichtung (10) befestigtes Kabel (44) zwischen dem Fortsatz (50) und dem vom Befestigungsabschnitt (38) gehaltenen Kabelband (40) klemmbar ist.

14. Befestigungsvorrichtung nach Anspruch 13, **dadurch gekennzeichnet, dass** der Fortsatz (50) so geformt ist, insbesondere gewölbt ist, dass das geschlossene und angezogene Kabelband (40), ohne ein zwischengeklemmtes Kabel vorzusehen am Fortsatz (50) außenseitig anliegt.

## Claims

1. Fastening device (10) for at least one cable (44), having an edge clip part (12) for attaching the fastening device (10) to an edge (28) of a base part (26), and having a holding device (30) for at least one cable tie (40) which surrounds at least one cable (44), wherein the holding device (30) has fastening portions (38), **characterized in that** the fastening portions (38) form a holder for the cable tie (40) in three mutually orthogonal cable-tie orientation directions such that a cable tie (40) is fastenable to the base part (26) selectively in a manner oriented in one of the three cable-tie orientation directions, wherein a plurality of fastening portions (38) are configured as a common holder part (32, 34, 36) and one holder part (32, 34, 36) has two fastening portions (38) for attaching a cable tie (40) in two orientation directions that extend orthogonally to one another.

2. Fastening device (10) according to Claim 1, **characterized in that** the holding device (30) is configured for the simultaneous fastening of a plurality of cable ties (40) to the edge clip part (12), having a first fastening portion (38) for holding a first cable tie (40) at the edge clip part (12) and a second fastening portion (38) for holding a second cable tie (40), wherein the cable ties (40) are preferably introducible into the fastening portions (38), and preferably having a third fastening portion (38) for holding a third cable tie (40) at the edge clip part (12).

3. Fastening device according to either of the preceding claims, **characterized in that** the fastening portions (38) form guides (42) for introducing a cable tie (40).

4. Fastening device according to one of the preceding claims, **characterized in that** a first fastening portion (38) is provided on the top side of the edge clip part (12) and a second fastening portion (38) is provided on the side of the edge clip part (12).

5. Fastening device according to one of the preceding claims, **characterized in that** at least one fastening portion (38) is produced in one piece with the edge clip part (12).

6. Fastening device according to one of the preceding claims, **characterized in that** one holder part (32, 34, 36) is provided with at least one fastening portion (38), wherein the holder part (32, 34, 36) is configured as a separate component which is fastened to the edge clip part (12), and in particular **in that** the holder part (32, 34, 36) is plugged onto the edge clip part (12) by way of a guide and is latched together with said edge clip part (12).

7. Fastening device according to 6, **characterized in that** the holder part (32, 34, 36) is configured in a rotatable manner with respect to the edge clip part (12), and in particular a fixing means is provided which fixes the rotatable holder part (32, 34, 36) in a circumferential direction.

8. Fastening device according to one of the preceding claims, **characterized in that** an upper holder part (36) having at least one fastening portion (38) is provided on the top side of the edge clip part (12) and at least one side holder part (32, 34) having at least one fastening portion (38) is provided on the side of the edge clip part (12), wherein preferably each holder part (32, 34, 36) has two fastening portions (38) for attaching a cable tie (40) in two orientation directions that extend orthogonally to one another.

9. Fastening device according to one of the preceding claims, **characterized in that** a cable tie (40) and the edge clip part (12) and/or a holder part (32, 34, 36) are connected together in one piece.

10. Fastening device according to one of the preceding claims, **characterized in that** the holding device (30) is configured as a cable tie lock (48), or **in that** a cable tie (40) is a separate component which has a cable tie part (46) and a cable tie lock (48).

11. Fastening device according to one of the preceding claims, **characterized in that** a metal part (20) that is insertable into the edge clip part (12) is provided, wherein the metal part (20) has at least one sheet-metal claw (24) which acts directly on the base part (26) with the fastening device (10) attached.

12. Fastening device according to one of the preceding claims, **characterized in that** a plurality of cable ties (40) are held at the holding device (30) and the orientation directions of the cable ties (40) allow at least two cables (44) that extend in the same direction to be fastened to the edge clip part (12) and/or the orientation directions of the cable ties (40) provide for at least two cables (44) that extend in different directions, in particular orthogonally to one another, to be fastened to the edge clip part (12).

13. Fastening device according to one of the preceding claims, **characterized in that** an outwardly directed extension (50) is provided on one fastening portion (38), wherein a cable (44) fastened to the fastening device (10) is able to be clamped between the extension (50) and the cable tie (40) held by the fastening portion (38).

14. Fastening device according to Claim 13, **characterized in that** the extension (50) is shaped, in particular curved, such that the closed and tightened cable tie (40) rests against the outside of the extension (50) without a cable clamped in between being provided.

## Revendications

1. Dispositif de fixation (10) pour au moins un câble (44) avec une partie d'encliquetage d'arête (12) destinée à la mise en place du dispositif de fixation (10) sur une arête (28) d'une partie de base (26) et avec un dispositif de retenue (30) pour au moins un câble-ruban (40) qui entoure au moins un câble (44), le dispositif de retenue (30) présentant des tronçons de fixation (38), **caractérisé en ce que** les tronçons de fixation (38) forment un support pour le câble-ruban (40) dans trois directions d'orientation du câble-ruban qui sont orthogonales les unes par rapport aux autres de telle sorte qu'un câble-ruban (40) peut être fixé sur la partie de base (26) en étant orienté au choix dans l'une des trois directions d'orientation du câble-ruban, plusieurs tronçons de fixation (38) étant constitués en tant que partie de support (32, 34, 36) commune, et une partie de support (32, 34, 36) présentant deux tronçons de fixation (38) pour la mise en place d'un câble-ruban (40) dans deux directions d'orientation orthogonales l'une par rapport à l'autre.

2. Dispositif de fixation (10) selon la revendication 1, **caractérisé en ce que** le dispositif de retenue (30) est constitué pour la fixation simultanée de plusieurs câbles-rubans (40) sur la partie d'encliquetage d'arête (12), avec un premier tronçon de fixation (38) destiné à la retenue d'un premier câble-ruban (40) sur la partie d'encliquetage d'arête (12) et avec un deuxième tronçon de fixation (38) destiné à la retenue d'un deuxième câble-ruban (40), les câbles-rubans (40) pouvant de préférence être introduits dans les tronçons de fixation (38), ainsi de préférence qu'avec un troisième tronçon de fixation (38) destiné à la retenue d'un troisième câble-ruban (40) sur la partie d'encliquetage d'arête (12).

3. Dispositif de fixation selon l'une des revendications précédentes, **caractérisé en ce que** les tronçons de fixation (38) forment des guidages (42) destinés à l'insertion d'un câble-ruban (40).

4. Dispositif de fixation selon l'une des revendications précédentes, **caractérisé en ce qu'**il est prévu un premier tronçon de fixation (38) sur le côté supérieur de la partie d'encliquetage d'arête (12) et un deuxième tronçon de fixation (38) latéralement sur la partie d'encliquetage d'arête (12).

5. Dispositif de fixation selon l'une des revendications précédentes, **caractérisé en ce qu'**au moins un tronçon de fixation (38) est fabriqué d'un seul tenant avec la partie d'encliquetage d'arête (12).

6. Dispositif de fixation selon l'une des revendications précédentes, **caractérisé en ce qu'**il est prévu une partie de support (32, 34, 36) avec au moins un tronçon de fixation (38), la partie de support (32, 34, 36) étant constituée en tant que composant séparé qui est fixé sur la partie d'encliquetage d'arête (12), et en particulier **en ce que** la partie de support (32, 34, 36) est enfichée avec un guidage sur la partie d'encliquetage d'arête (12) et est enclenchée avec elle.

7. Dispositif de fixation selon 6, **caractérisé en ce que** la partie de support (32, 34, 36) est constituée de façon à pouvoir tourner par rapport à la partie d'encliquetage d'arête (12), et en particulier **en ce qu'**il est prévu un moyen de blocage qui bloque la partie de support (32, 34, 36) rotative dans une direction circonférentielle.

8. Dispositif de fixation selon l'une des revendications précédentes, **caractérisé en ce qu'**il est prévu une partie de retenue (36) supérieure avec au moins un tronçon de fixation (38) sur le côté supérieur de la partie d'encliquetage d'arête (12) et au moins une partie de support (32, 34) latérale avec au moins un tronçon de fixation (38) latéralement sur la partie d'encliquetage d'arête (12), chaque partie de support (32, 34, 36) présentant de préférence deux tronçons de fixation (38) pour la mise en place d'un câble-ruban (40) dans deux directions d'orientation orthogonales l'une par rapport à l'autre.

9. Dispositif de fixation selon l'une des revendications précédentes, **caractérisé en ce qu'**un câble-ruban (40) et la partie d'encliquetage d'arête (12) et/ou une partie de support (32, 34, 36) sont raccordés l'un à l'autre/les uns aux autres d'un seul tenant.

10. Dispositif de fixation selon l'une des revendications précédentes, **caractérisé en ce que** le dispositif de retenue (30) est constitué en tant que serrure de câble-ruban (48) ou **en ce qu'**un câble-ruban (40) est un élément séparé qui présente une partie de câble-ruban (46) et une serrure de câble-ruban (48).

11. Dispositif de fixation selon l'une des revendications précédentes, **caractérisé en ce qu'**il est prévu une partie métallique (20) pouvant être insérée dans la partie d'encliquetage d'arête (12), la partie métallique (20) présentant au moins une griffe en tôle (24) qui agit directement sur la partie de base (26) quand le dispositif de fixation (10) est enfiché.

12. Dispositif de fixation selon l'une des revendications précédentes, **caractérisé en ce que** plusieurs câbles-rubans (40) sont retenus sur le dispositif de retenue (30), et les directions d'orientation des câbles-rubans (40) permettent une fixation d'au moins deux câbles (44) s'étendant dans la même direction sur la partie d'encliquetage d'arête (12), et/ou les directions d'orientation des câbles-rubans (40) prévoient une fixation sur la partie d'encliquetage d'arête (12) d'au moins deux câbles (44) s'étendant dans différentes directions, en particulier de façon orthogonale l'un par rapport à l'autre.

13. Dispositif de fixation selon l'une des revendications précédentes, **caractérisé en ce qu'**il est prévu un prolongement (50) dirigé vers l'extérieur sur un tronçon de fixation (38), un câble (44) fixé sur le dispositif de fixation (10) pouvant être coincé entre le prolongement (50) et le câble-ruban (40) retenu par le tronçon de fixation (38).

14. Dispositif de fixation selon la revendication 13, **caractérisé en ce que** le prolongement (50) est formé, en particulier bombé, de telle sorte que le câble-ruban (40) fermé et serré est adjacent, côté extérieur, au prolongement (50) sans câble coincé en position intermédiaire.
